# EUROPEAN PATENT SPECIFICATION

(11) **EP 3 810 955 B1**
(45) Date of publication and mention of the grant of the patent: **31.08.2022**
(21) Application number: 19742941.8
(22) Date of filing: 21.06.2019
(51) Int. Cl.: F16D 65/18

(54) **PARKING DEVICE OF A BRAKE CALIPER FOR A DISC BRAKE OF A VEHICLE**
PARKVORRICHTUNG EINES BREMSSATTELS FÜR EINE SCHEIBENBREMSE EINES FAHRZEUGS
DISPOSITIF DE STATIONNEMENT D'UN ÉTRIER DE FREIN POUR UN FREIN À DISQUE D'UN VÉHICULE

(30) Priority: 21.06.2018 IT 201800006537; 21.06.2018 IT 201800006541
(43) Date of publication of application: 28.04.2021
(73) Proprietor: BREMBO S.p.A., 24035 Curno (BERGAMO) (IT)
(72) Inventor: BOSIS, Alberto, I-24035 Curno (BERGAMO) (IT)
(74) Representative: Busana, Omar
(86) International application number: PCT/IB2019/055240
(87) International publication number: WO 2019/244114

(56) References cited:
- EP-A1- 0 579 178
- WO-A1-2009/016680
- US-A- 5 009 292
- US-A- 5 697 475

## Description

### FIELD OF APPLICATION

The present invention relates to a parking device of a brake caliper for a disc brake of a vehicle, as for instance known from US 5 697 475 A.

### PRIOR ART

As is known, brake calipers provided with parking systems comprise an actuation lever which can be operated by the driver via the handbrake lever or, in more recent systems, by means of an electronic device, which can be connected to the actuation lever in different ways.

The actuation lever, following a rotation thereof, acts on a mechanism that causes a translation of at least one pad against a disc of the disc brake, tightening it and thus achieving the parking braking.

More particularly, the mechanism provides an actuation shaft connected to the actuation lever, and associated with a main plate arranged with shaped rolling seats suitable for at least partially accommodating balls and allowing them to roll therein.

The mechanism further comprises a reaction plate, which is integral with the caliper body of the brake caliper and which is suitable for cooperating with the main plate by means of the balls. In fact, the reaction plate also has shaped rolling seats, suitable for partially accommodating the balls and allowing them to roll therein.

Unlike the main plate, the reaction plate is stationary and cannot rotate.

In an initial position, the main plate and the reaction plate are positioned so that the respective seats thereof are facing and the balls can roll simultaneously in the seats of both.

The seats of the main plate and the seats of the reaction plate are shaped in such a way that, following the rotation of the main plate, the balls follow a rolling path such as to move the main plate and the reaction plate away from each other.

Then, by acting on the actuation lever, the main plate, connected to the actuation lever by the actuation shaft, rotates and moves away from the reaction plate.

In order to disengage the parking brake, a return mechanism is provided which comprises both a return spring arranged at the actuation lever and a thrust mechanism which acts on the main plate and pushes it towards the reaction plate.

The systems of the prior art, although widely appreciated, are not free from drawbacks.

In the first place, the return mechanism is subject to clearances, albeit minimal, between parts thereof. In particular, there is the presence of clearances between the main plate and the actuation shaft and in the thrust mechanism. The presence of these clearances entails that a first part of the rotation of the actuation lever is idle.

Secondly, in the return rotation of the actuation lever, there is a certain residual torque induced by the return spring. In fact, the return spring tends to return the actuation lever beyond the rest position, thus further increasing the idle stroke section.

### DISCLOSURE OF THE INVENTION

The need to solve the drawbacks and limitations mentioned with reference to the prior art is therefore felt.

Therefore, the need is felt to provide a parking device of a brake caliper for a disc brake of a vehicle in which the idle stroke of the actuation lever is reduced.

Furthermore, the need is felt for a parking device in which the idle stroke can be decreased, and in particular can be adjusted.

These requirements are met at least partially by a parking device of a brake caliper for a disc brake of a vehicle according to claim 1.

In particular, it is met by a parking device of a brake caliper for a disc brake of a vehicle comprising:
- a support body;
- thrust means provided on said support body, suitable to exert a thrust action on at least one pad of said disc brake;
- actuation means suitable to actuate said thrust means to exert said thrust action on said at least one pad, said actuation means comprising an actuation lever rotatably connected to the support body, said actuation lever being movable between: an operative position in which said parking device is active, and a rest position, wherein said parking device is inactive; said actuation means comprising an adjustable stop for said actuation lever in said rest position.

According to a possible embodiment, the actuation means comprise a contrast element removably connected to the support body, said adjustable stop being provided on said contrast element.

According to a possible embodiment, the contrast element and the actuation lever lie substantially parallel, said adjustable stop projecting from said contrast element towards said actuation lever, said adjustable stop projecting from said contrast element by an amount greater than the distance between said actuation lever and said contrast element.

According to the invention, the actuation lever comprises a side surface, said adjustable stop being suitable to cooperate with the side surface of said actuation lever, the adjustable stop being a shaped pin which realizes a cam coupling with the side surface of said actuation lever.

According to a possible embodiment, the adjustable stop is provided on a hole of the contrast element, said adjustable stop comprises a first portion and a second portion, said first portion defining a rotation axis for said adjustable stop, said second portion being suitable for realizing said cam coupling with the side surface of said actuation lever.

According to a possible embodiment, the second portion has a transverse cross-section with an edge, said edge having a variable distance with respect to said rotation axis.

According to a possible embodiment, the second portion is a cylinder which defines a cylinder axis, said cylinder axis being parallel and distant from said axis of rotation.

According to a possible embodiment, the distance between said rotation axis and said cylinder axis is between 1.6 mm and 1.4 mm, said cylinder having a diameter between 12.1 mm and 11.9. mm.

According to a possible embodiment, the adjustable stop comprises a fixing screw comprising a head and a shank, said first portion being therefore provided with a threaded seat, said hole being flared so as to be able to accommodate at least partially the head of said screw.

According to a possible embodiment, the first portion comprises an outer surface having a hexagonal transverse cross-section.

### DESCRIPTION OF THE DRAWINGS

Further features and the advantages of the present invention will be better understood from the following description of preferred and non-limiting embodiments, in which:
- figure 1 schematically shows an exploded view of a brake caliper according to the present invention;

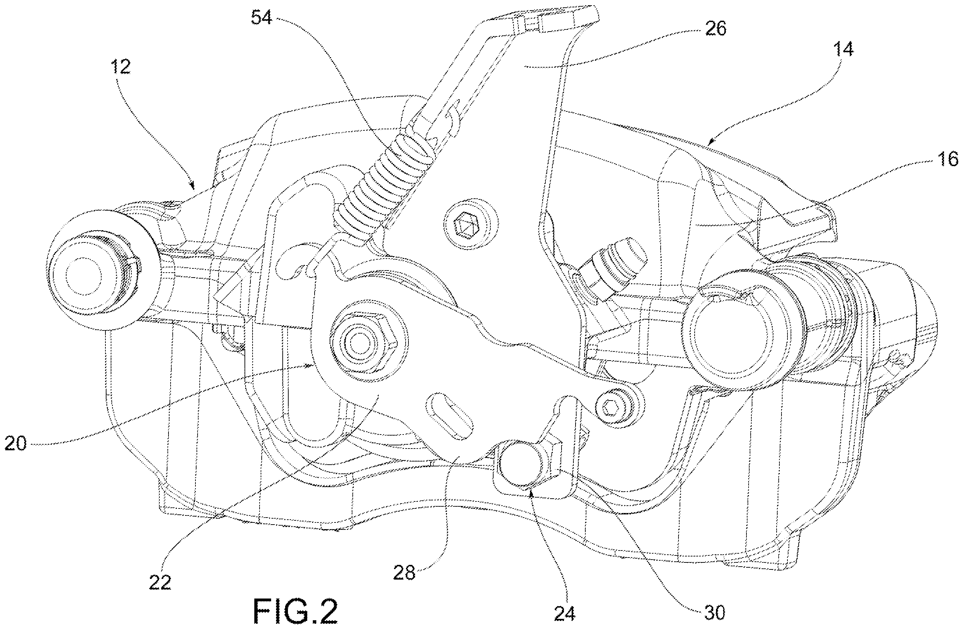

- figure 2 schematically shows a perspective view of a brake caliper according to the present invention;

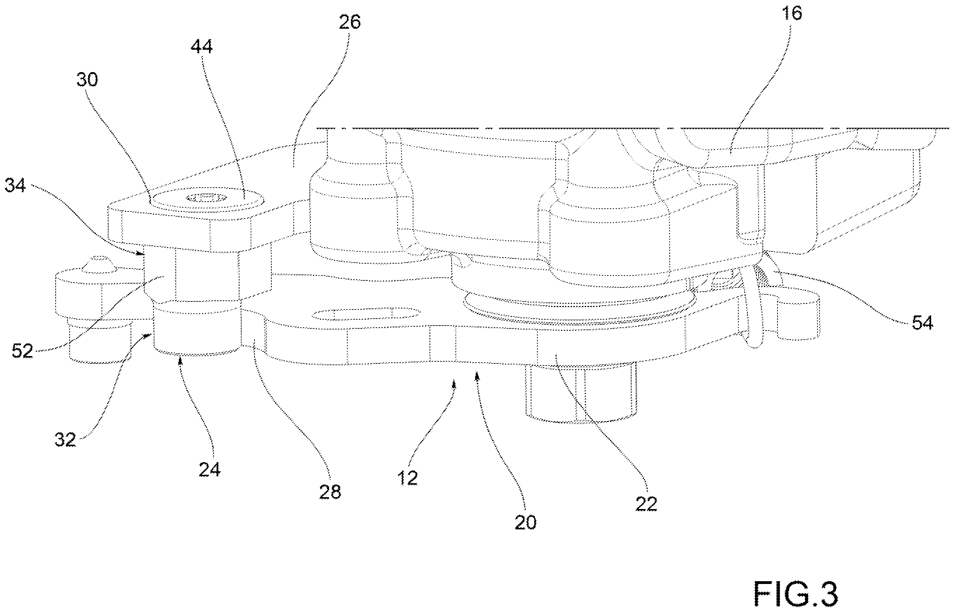

- figure 3 schematically shows an enlargement of a portion of a brake caliper according to the present invention;

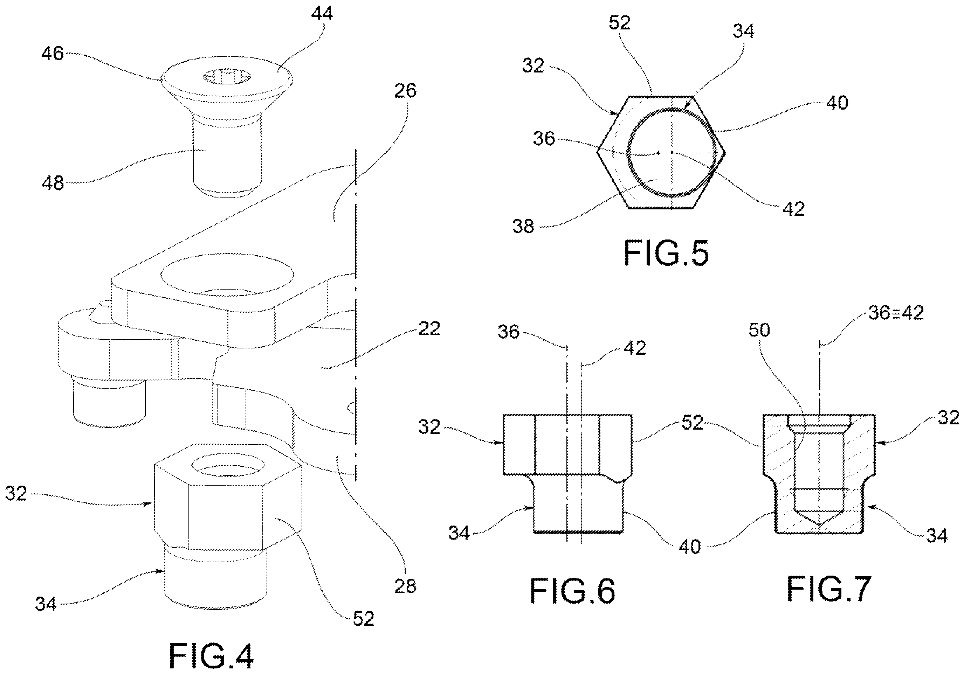

- figure 4 schematically shows an exploded view of a portion of a brake caliper according to the present invention;
- figures 5-7 schematically show three orthogonal projections of a component of the parking device of a brake caliper for a disc brake of a vehicle according to the present invention.

Elements or parts of elements in common to the embodiments described below are referred to with the same reference numerals.

### DETAILED DESCRIPTION

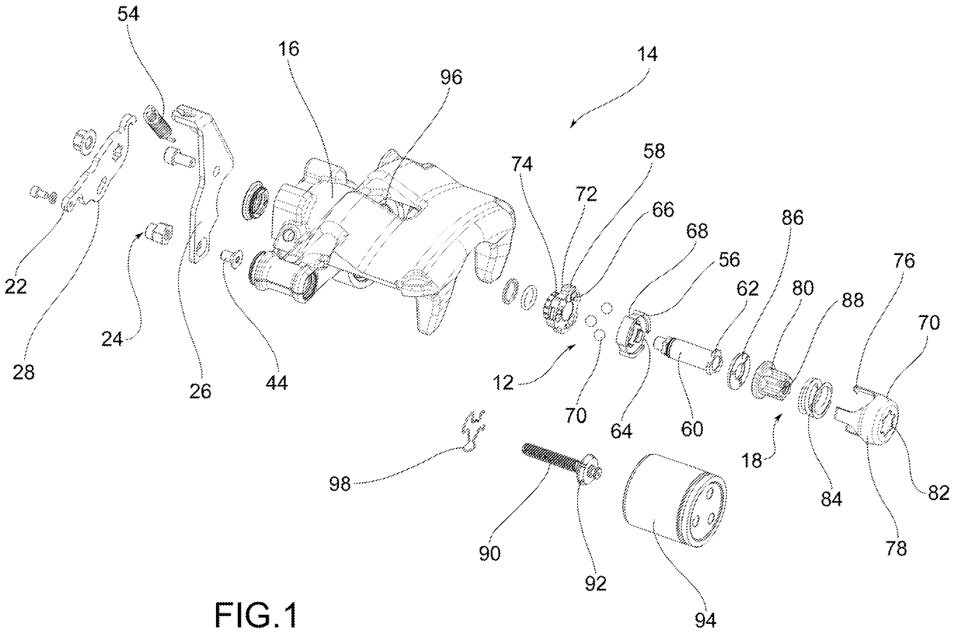

In figure 1, reference numeral 12 indicates a parking device of a brake caliper for a disc brake of a vehicle.

The parking device 12 comprises:
- a support body 16;
- thrust means 18 suitable to exert a thrust action on at least one pad of the disc brake;
- actuation means 20 suitable to actuate said thrust means 18 to exert the thrust action on the at least one pad.

The actuation means comprise an actuation lever 22 rotatably connected to the support body 16, so that the actuation lever 22 is movable between:
- an operative position in which the parking device 12 is active, and
- a rest position, in which the parking device 12 is inactive.

The term "active parking device" means an operating configuration in which the at least one pad is translated against the disc, tightening it and thus achieving the parking braking.

The term "inactive parking device" means an operating configuration in which the at least one pad is distal to the disc.

The actuation means 20 comprise an adjustable stop 26 for the actuation lever 22 in the rest position.

According to a possible embodiment of the present invention, the actuation means 20 comprise a contrast element 26 removably connected to the support body 16. Advantageously, the adjustable stop 24 can be arranged on the contrast element 26.

According to alternative embodiments, the adjustable stop 24 can be arranged, for example, directly on the support body 16.

A return spring 54 can be connected to the actuation lever 22, which in turn can be connected to the support body 16, or to an element integral therewith, i.e. the contrast element 26. The action of the return spring 54 tends to return the actuation lever 22 to the rest position.

The contrast element 26 and the actuation lever 22 can have a substantially parallel position. In particular, the adjustable stop 24 can project from the contrast element 26 towards the actuation lever 22. The adjustable stop 24 can project from the contrast element 26 by an extent greater than the distance between said actuation lever 22 and the contrast element 26.

The actuation lever 20 comprises a side surface 28, with which the adjustable stop 24 is adapted to cooperate. The adjustable stop 24 can be a shaped pin suitable for realizing a cam coupling with the side surface 28 of the actuation lever 22.

The adjustable stop 24 is arranged on a hole 30 of the contrast element 26, and comprises a first portion 32 and a second portion 34.

The first portion 32, which is adapted to couple with the contrast element 26, defines a rotation axis 36. The second portion 34 is suitable for realizing the cam coupling with the side surface 28 of the actuation lever 22.

The second portion 34 has a transverse cross-section 38 with an edge 40, said edge having a variable distance with respect to said rotation axis 36.

In this way, therefore, a cam coupling is formed, suitable for adjusting the rest position of the actuation lever 22, through a rotation of the first portion 32 about the rotation axis 36, which moves the contact point with the actuation lever 22 along the edge 40.

The second portion 34 is a cylinder which defines a cylinder axis 42. Advantageously, the cylinder axis 42 is parallel and distant from the rotation axis 36.

The distance between the rotation axis 36 and the cylinder axis 42 is between 1.6 mm and 1.4 mm. The diameter of the second portion 34 having a cylinder shape can be between 12.1 mm and 11.9 mm.

Advantageously, the distance between the rotation axis 36 and the cylinder axis 42 can be about 1.5 mm, and the diameter of the cylinder can be about 12 mm.

Therefore, by turning the adjustable stop, it is possible to obtain an adjustment of the stroke of the actuation lever 22. Advantageously, the adjustment can be between about +1.5 mm and -1.5 mm.

The second portion 34 may have an ellipse-shaped cross-section, or a generic curvature.

The adjustable stop 24 comprises a fixing screw 44 comprising a head 46 and a shank 48. Consequently, the first portion 32 is provided with a threaded seat 50, having an axial extension. The hole 30 of the contrast element 26 can be flared so as to be able to at least partially accommodate the head 46 of the screw 44.

The adjustable stop 24 can be fixed to the contrast element 26 in different ways.

The first portion 32 comprises an outer surface 52 having a hexagonal transverse cross-section. Advantageously, it is therefore possible to adjust the adjustable stop with a wrench.

The other main components of the actuation means 20 and of the components of the thrust means 18 will now be briefly described.

As mentioned above, the parking device 12 comprises actuation means 20 suitable for actuating thrust means 18, so that the thrust means 18 exert a thrust action on at least one pad.

The actuation means 18 comprise a main plate 56, suitable to perform roto-translations with respect to the main body 16, and a reaction plate 58, connected integrally to the main body 16.

The actuation means 18 may comprise an actuation shaft 60 suitable to rotate and/or slide with respect to the support body 16 and connected to the main plate 56. In this regard, the connection between the actuation shaft 60 and the main plate 56 can take place by shape coupling between the shaped end 62 of the actuation shaft 60 and a shaped seat 64 on the main plate 56.

The actuation shaft 60 is connected integrally in rotation to the actuation lever 22.

At least one between the main plate 56 and the reaction plate 58 comprises at least one, preferably three, rolling seats 66, 68 suitable to accommodate at least partially three balls 70 and to roll them therein along predetermined rolling paths.

Both plates 56, 58 may comprise respective rolling seats 66, 68. In this way, the corresponding and opposite seats 66, 68 of the main plate 56 and of the reaction plate 58 are capable of accommodating the same ball 70 therein and make it roll along the respective rolling paths.

The reaction plate 58 forms means for the connection with a support device 70 suitable for supporting the thrust means 18. For example, the reaction plate 58 may be arranged with radially projecting portions 72 which delimit therebetween connection seats 74 for connecting the reaction plate 58 with the support device 70, for example with elastic legs 76 of a cage 78 connectable snap-wise to the reaction plate 58. In this way, the cage 78 and the reaction plate 58 are integral with each other in rotation and in translation.

The cage 78 supports a thrust shaft 80 operatively connected to the main plate 56. The thrust shaft 80 is suitable to slide with respect to the cage 78, to which instead it is integral in rotation.

In this regard, the cage 78 defines a cage seat 82 for the thrust shaft 80, having a profile substantially complementary to the profile of the thrust shaft 80. According to a possible embodiment, the thrust shaft 80 can be provided with a profile provided with a plurality of lobes, suitable for realizing a shape coupling between the thrust shaft 80 and the cage seat 82.

Between the cage 78 and the thrust shaft 80 a contrast spring 84 may be arranged, suitable to push the thrust shaft 80 towards the main plate 56.

As will be apparent to the man skilled in the art, the roto-translation of the main plate 56, triggered by the methods described by the rotation of the actuation lever 22, results in a translation of the thrust shaft 80, which translates approaching the space which in use is occupied by the disc of the brake disc.

As mentioned above, the kinematic chain, at the coupling between the main plate 56 and the actuation shaft 60, and between the cage 78 and the thrust shaft 80, can be subjected to clearances which can be advantageously adjusted with the adjustable stop 24 according to the present invention.

In order to reduce the friction torques due to the relative rotations between the main plate 56 and the thrust shaft 80, a fifth wheel 86 covered with Teflon may be provided.

The thrust shaft 80 is provided with a threaded seat 88 suitable for accommodating a threaded pin 90. At the end of the threaded pin 90 facing the space which ion use is occupied by the disc, a thrust head 92, preferably truncated-cone, may be provided, suitable for engaging in a corresponding head seat of a piston 94 free to slide within a piston seat 96 delimited by the support body 16. The thrust head 92 is advantageously kept pressed in the seat by a thrust spring 98 acting between the thrust head 92 and the piston itself.

The translation of the thrust shaft 80 therefore results in a translation of the piston 94, to which at least one pad is operatively connected, which is thus pushed against the brake disc.

The advantages that can be achieved with a parking device according to the present invention are now apparent.

Thanks to the adjustable stop 24 it is possible to recover at least partially the clearances at the coupling between the main plate 56 and the actuation shaft 60, and between the cage 78 and the thrust shaft 80.

In fact, through the adjustable stop it is possible to adjust the angular position of the actuation lever and in particular the rest position thereof, in which the parking brake is not active.

Moreover, it is also possible to counteract the angular positioning of the actuation lever 20 due to the return spring 54, which tends to return the actuation lever 22 from the operating position more than necessary, and in particular beyond the rest position.

Hereinafter, a parking device of a brake caliper for a disc brake of a vehicle is also described, comprising:
- a support body;
- thrust means provided on said support body, suitable to exert a thrust action on at least one pad of said disc brake;
- actuation means suitable to actuate said thrust means to exert said thrust action on said at least one pad, said actuation means comprising an actuation lever rotatably connected about a rotation axis to the support body, said actuation lever being movable between: an operative position in which said parking device is active, and a rest position, wherein said parking device is inactive;
- said actuation lever comprising retention means for a connection fork of a control cable;
   characterised in that said retention means comprise a retention element which can be connected to an end of said actuation lever suitable to prevent the extraction of the connection fork from said actuation lever.

As is known, the actuation lever is moved, and in particular rotated about a rotation axis which is substantially perpendicular to the lying thereof, by means of a control cable comprising a sheath inside which a cable, i.e. a so-called Bowden cable, slides.

This type of cable is used for remote mechanical transmissions, using the movement of the cable inside the sheath whose ends are kept fixed.

In particular, in the vicinity of the end of the cable that is connected to the control lever, a sheath end is provided, suitable for coupling with a respective sheath block which can be provided directly on the support body, or on an element integral therewith.

The end of the cable is instead connected to one end of the actuation lever so that moving the cable can cause the rotation of the latter.

In this regard, the control lever is provided with a hook, and the end of the cable is provided with a connection fork which defines a slot.

The systems of the prior art, although widely appreciated, are not free from drawbacks.

In the first place, the hook generally has a C-shape, such that the open part of the C is substantially opposite to the sheath block. This position is necessary to prevent the connection fork from slipping off the hook during use of the device.

For the same reason, the insertion of the connection fork, which is rigid, on the hook is possible only with a predetermined orientation so that, during normal operation, the connection fork cannot be pulled out of the hook.

It is therefore necessary to insert the connection fork on the hook with the end of the cable arranged with an insertion angle of about 120° with respect to the direction defined by the line joining the sheath block with the hook. Once the connection fork has been inserted on the hook, the cable is rotated towards the sheath block, realizing the connection between the sheath and the sheath block.

The assembly of the control cable is therefore not very easy, considering above all that the cable, depending on the application, can measure up to 1.5 meters.

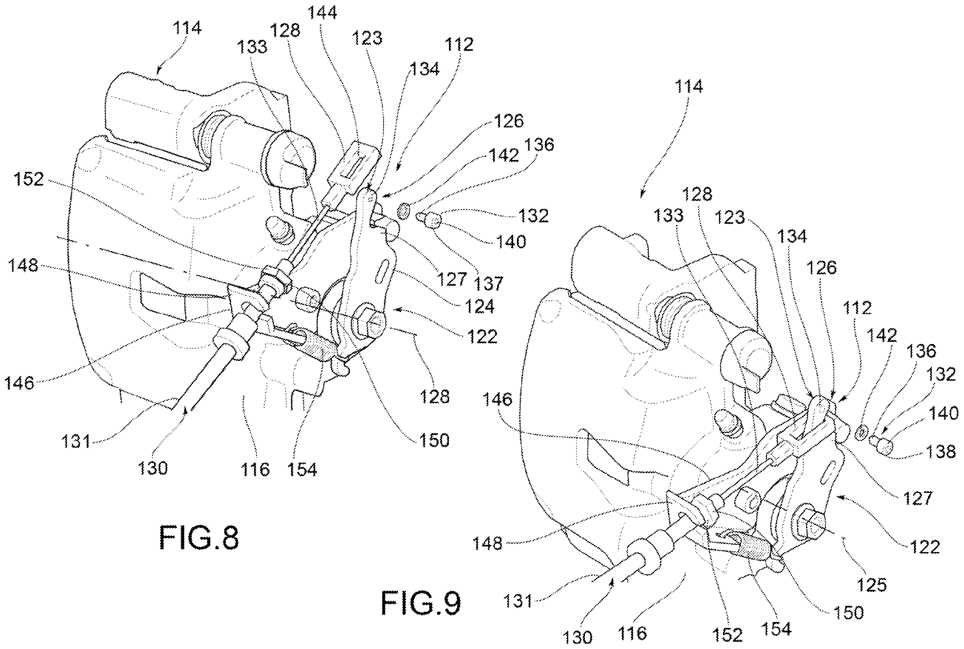

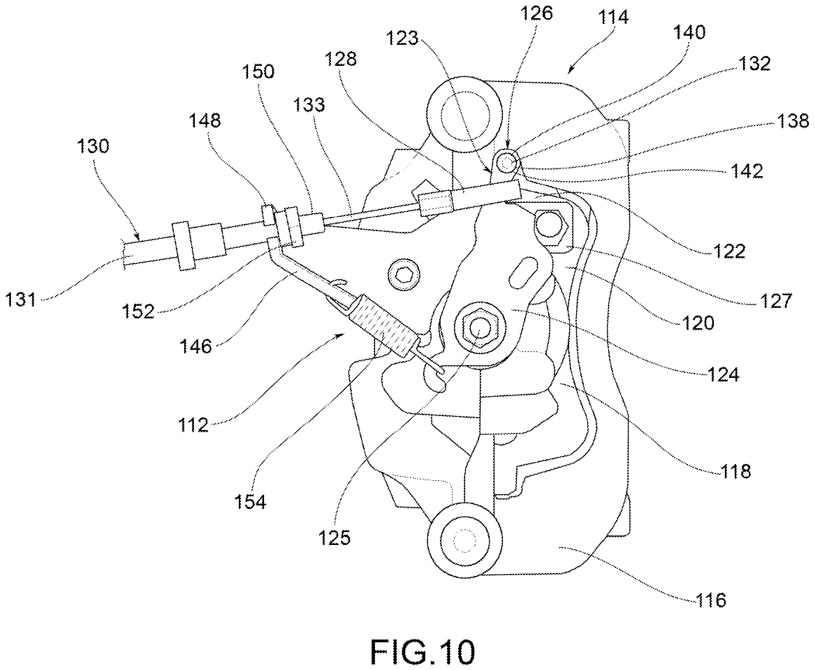

In figure 8, reference numeral 112 indicates a parking device of a brake caliper 114 for a disc brake of a vehicle.

The parking device 112 of a brake caliper 114 for a disc brake of a vehicle comprises:
- a support body 116;
- thrust means 118 provided on the support body 116, suitable to exert a thrust action on at least one pad 120 of the disc brake; and
- actuation means 122 suitable to actuate the thrust means 118 to exert the thrust action on the at least one pad 120.

The actuation means 122 comprise an actuation lever 124 rotatably connected to the support body 116.

The actuation lever 124 is movable between:
- an operative position in which the parking device 112 is active, and
- a rest position, in which the parking device 112 is inactive.

The actuation lever 124 comprises retention means 126 for a connection fork 128 of a control cable 130. The control cable 130 comprises a sheath 131 and a cable 133.

The retention means 122 comprise a retention element 132 which can be connected to an end 123 of said actuation lever 124, suitable to prevent the extraction of the connection fork 128 from the actuation lever 124.

The retention element 132 projects from the actuation lever 124 in a direction parallel to the rotation axis 125 of the actuation lever 124.

Advantageously, the retention element 132 projects from the actuation lever 124 in a direction substantially perpendicular to the hook of the prior art. In fact, as mentioned above, the hook of the prior art has a substantially parallel position with respect to the actuation lever, which involves a rotation of the cable for connection to the actuation lever.

In particular, the retention element 132 may project from the actuation lever 124 in a direction parallel to the rotation axis 125 of the actuation lever 124, in the opposite direction with respect to the support body 116. Basically, the retention element projects towards the outside of the caliper, so that it is also easily accessible during assembly or disassembly, or to check the integrity of the connection.

The actuation lever 124 comprises a threaded seat 134, for the retention element 132, which in turn is provided with an at least partially threaded shank 136, suitable for coupling with the threaded seat 134.

The retention element 132 comprises a head 138, with a hexagonal socket 140. The positioning of the retention element 132 is therefore facilitated by the fact that the surface to be grasped is not external, but is internal, and therefore due for example to an Allen wrench it is possible to screw the retention element 132 onto the actuation lever 124.

The retention means 126 comprise a toothed washer 142, inserted on the shank 136 of the retention element 132, and interposed between a portion of the surface of the actuation lever 124 and the head 138.

The actuation lever 124 comprises a shoulder 127. Advantageously, the shoulder 127 is suitable to prevent the extraction of the connection fork 128 in a direction opposite to the retention element 132.

Advantageously, the retention element 132 may provide a stop for the connection fork 128 according to a different direction with respect to the shoulder 127, in particular according to a direction perpendicular to the shoulder 127.

The connection fork 128 used may be the same used in the devices of the prior art.

In particular, the connection fork 128 may comprise a rigid slot, for example made of metal, with an opening 144 inside which the end 123 of the actuation lever 124 is inserted.

Advantageously, the connection fork 128 in position is included between the retention means 126 and the shoulder 127 arranged on the actuation lever 124. In this way, the extraction of the connection fork in the direction of the retention means 126 and in the opposite direction is prevented thanks to the shoulder 127.

The actuation means 120 comprise a contrast element 126 removably connected to the support body 116.

The brake caliper may comprise a contrast element 146 which may be integrated in the support body 116, or it may be an element integral with the support body itself. The contrast element 126 and the actuation lever 122 can have a substantially parallel position.

The contrast element 146 comprises a sheath block 148, suitable to couple with one end of the sheath 131, in particular with a sheath end 150.

Advantageously, the sheath block 148 comprises a C-element. The opening of the C may be facing towards the outside of the caliper. The C-shaped element may be slightly narrower than the outer diameter of the sheath 131 so that once the sheath 131 is inserted, it remains in position.

In the embodiment shown in the accompanying figures, the sheath end 150 is of the adjustable type. In this regard, it comprises a shaped gripping portion 152 suitable to be gripped. In particular, the gripping portion may have a hexagonal transverse cross-section.

A return spring 152 can be connected to the actuation lever 124, which in turn can be connected to the support body 116, or to the contrast element 146. The action of the return spring 154 tends to return the actuation lever 122 to the rest position.

A method of mounting a control cable 130 of a parking device 112 of a brake caliper 114 for a disc brake of a vehicle according to the present invention will now be described.

The method includes the following steps:
- providing a control cable 130 comprising a connection fork 128;
- inserting the connection fork 128 at one end of the actuation lever 124;
- connecting the retention element 132 to the actuation lever 124 so as to prevent the connection fork 128 from coming off the actuation lever.

During insertion of the connection fork 128 the portion of the control cable 130 close to the connection fork 128 has a direction substantially parallel to the direction of the same portion of the control cable 130 when mounted.

The method may also comprise a screwing step of the retention element 132 on the actuation lever 124.

The method may comprise a step in which a toothed washer 142 is positioned between a portion of actuation lever 124 and the head 38 of the retention element 132.

The method may further comprise a step in which the sheath 131 of the control cable 130 is inserted into the sheath block 148 prior to the insertion of the connection fork 128 at the end of the actuation lever 124.

Advantageously, it is possible to insert the connection fork already having the sheath and therefore the control cable partially in position, inside the sheath block.

The advantages that can be achieved with a parking device according to the present invention are now apparent.

In particular, a connection between the control cable and the easy-to-install actuation lever has been provided, since limited or no rotation of the control cable with respect to the final position thereof is required.

Moreover, the device is easy to assemble also because the assembly of the retention element 132 takes place along a direction parallel to the rotation axis of the actuation lever 124 and therefore from a position easily accessible during use.

Furthermore, a safer parking device has been provided with respect to the prior art devices, since the extraction of the connection fork 128 is prevented by the presence of the retention element 132, even in the case of unforeseen rotations of the control cable 130.

A man skilled in the art may make modifications and/or replacements of elements described with equivalent elements to the embodiments described above in order to meet specific needs, without departing from the scope of the appended claims.

## Claims

1. Parking device (12) of a brake caliper (14) for a disc brake of a vehicle, comprising:
- a support body (16);
- thrust means (18) provided on said support body, suitable to exert a thrust action on at least one pad of said disc brake;
- actuation means (20) suitable to actuate said thrust means (18) to exert said thrust action on said at least one pad, said actuation means (20) comprising an actuation lever (22) rotatably connected to the support body (16), said actuation lever (22) being movable between: an operative position in which said parking device (12) is active, and a rest position, wherein said parking device (12) is inactive; said actuation means (20) comprise an adjustable stop (24) for said actuation lever (22) in said rest position;
**characterised in that** said actuation lever (22) comprises a side surface (28), said adjustable stop (24) being suitable to cooperate with the side surface (28) of said actuation lever (22), said adjustable stop (24) being a shaped pin which realizes a cam coupling with the side surface (28) of said actuation lever (22).

2. Parking device (12) according to the preceding claim, **characterized in that** said actuation means comprise a contrast element (26) removably connected to the support body (16), said adjustable stop (24) being provided on said contrast element (26).

3. Parking device (12) according to the preceding claim, **characterized in that** said contrast element (26) and said actuation lever (22) lie substantially parallel, said adjustable stop (24) projecting from said contrast element (26) towards said actuation lever (22), said adjustable stop (24) projecting from said contrast element (26) by an amount greater than the distance between said actuation lever (22) and said contrast element (26).

4. Parking device (12) according to the preceding claim, **characterized in that** the adjustable stop (24) is provided on a hole (30) of the contrast element (26), said adjustable stop (24) comprises a first portion (32) and a second portion (34), said first portion (32) defining a rotation axis (36) for said adjustable stop (24), said second portion (34) being suitable for realizing said cam coupling with the side surface (28) of said actuation lever (22).

5. Parking device (12) according to the preceding claim, **characterized in that** said second portion (34) has a transverse cross-section (38) with an edge (40), said edge (40) having a variable distance with respect to said rotation axis (36).

6. Parking device (12) according to the preceding claim, **characterized in that** said second portion (34) is a cylinder which defines a cylinder axis (42), said cylinder axis (42) being parallel and distant from said axis of rotation (36).

7. Parking device (12) according to the preceding claim, **characterized in that** the distance between said rotation axis (36) and said cylinder axis (42) is between 1.6 mm and 1.4 mm, said cylinder having a diameter between 12.1 mm and 11.9. mm.

8. Parking device according to any one of the preceding claims, **characterized in that** said adjustable stop (24) comprises a fixing screw (44) comprising a head (46) and a shank (48), said first portion (32) being therefore provided with a threaded seat (50), said hole (30) being flared so as to be able to accommodate at least partially the head (46) of said screw (44).

9. Parking device according to any one of the claims 4-8, **characterized in that** said first portion (32) comprises an outer surface (52) having a hexagonal transverse cross-section.

## Patentansprüche

1. Parkvorrichtung (12) eines Bremssattels (14) für eine Scheibenbremse eines Fahrzeugs, umfassend:
- einen Tragekörper (16);
- Schubmittel (18), welche an dem Tragekörper bereitgestellt sind, welche geeignet sind, eine Schubwirkung auf wenigstens einen Belag der Scheibenbremse auszuüben;
- Betätigungsmittel (20), welche dazu geeignet sind, die Schubmittel (18) zu betätigen, um die Schubwirkung auf den wenigstens einen Belag auszuüben, wobei die Betätigungsmittel (20) einen Betätigungshebel (22) umfassen, welcher rotierbar mit dem Tragekörper (16) verbunden ist, wobei der Betätigungshebel (22) bewegbar ist zwischen: einer Betriebsposition, in welcher die Parkvorrichtung (12) aktiv ist, und einer Ruheposition, in welcher die Parkvorrichtung (12) inaktiv ist;
wobei die Betätigungsmittel (20) einen einstellbaren Anschlag (24) für den Betätigungshebel (22) in der Ruheposition umfassen;
**dadurch gekennzeichnet, dass** der Betätigungshebel (22) eine Seitenfläche (28) umfasst, wobei der einstellbare Anschlag (24) geeignet ist, mit der Seitenfläche (28) des Betätigungshebels (22) zusammenzuwirken, wobei der einstellbare Anschlag (24) ein geformter Stift ist, welcher eine Nockenkopplung mit der Seitenfläche (28) des Betätigungshebels (22) ausführt.

2. Parkvorrichtung (12) nach dem vorhergehenden Anspruch, **dadurch gekennzeichnet, dass** die Betätigungsmittel ein Kontrastelement (26) umfassen, welches lösbar mit dem Tragekörper (16) verbunden ist, wobei der einstellbare Anschlag (24) an dem Kontrastelement (26) bereitgestellt ist.

3. Parkvorrichtung (12) nach dem vorhergehenden Anspruch, **dadurch gekennzeichnet, dass** das Kontrastelement (26) und der Betätigungshebel (22) im Wesentlichen parallel liegen, wobei der einstellbare Anschlag (24) von dem Kontrastelement (26) in Richtung des Betätigungshebels (22) vorsteht, wobei der einstellbare Anschlag (24) von dem Kontrastelement (26) um einen Betrag vorsteht, welcher größer als die Distanz zwischen dem Betätigungshebel (22) und dem Kontrastelement (26) ist.

4. Parkvorrichtung (12) nach dem vorhergehenden Anspruch, **dadurch gekennzeichnet, dass** der einstellbare Anschlag (24) an einem Loch (30) des Kontrastelements (26) bereitgestellt ist, wobei der einstellbare Anschlag (24) einen ersten Abschnitt (32) und einen zweiten Abschnitt (34) umfasst, wobei der erste Abschnitt (32) eine Rotationsachse (36) für den einstellbaren Anschlag (24) definiert, wobei der zweite Abschnitt (34) geeignet ist, um die Nockenkopplung mit der Seitenfläche (28) des Betätigungshebels (22) auszuführen.

5. Parkvorrichtung (12) nach dem vorhergehenden Anspruch, **dadurch gekennzeichnet, dass** der zweite Abschnitt (34) einen transversalen Querschnitt (38) mit einem Rand (40) aufweist, wobei der Rand (40) eine variable Distanz bezüglich der Rotationsachse (36) aufweist.

6. Parkvorrichtung (12) nach dem vorhergehenden Anspruch, **dadurch gekennzeichnet, dass** der zweite Abschnitt (34) ein Zylinder ist, welcher eine Zylinderachse (42) definiert, wobei die Zylinderachse (42) parallel und beabstandet von der Rotationsachse (36) ist.

7. Parkvorrichtung (12) nach dem vorhergehenden Anspruch, **dadurch gekennzeichnet, dass** die Distanz zwischen der Rotationsachse (36) und der Zylinderachse (42) zwischen 1,6 mm und 1,4 mm beträgt, wobei der Zylinder einen Durchmesser zwischen 12,1 mm und 11,9 mm aufweist.

8. Parkvorrichtung nach einem der vorhergehenden Ansprüche, **dadurch gekennzeichnet, dass** der einstellbare Anschlag (24) eine Fixierungsschraube (44) umfasst, welche einen Kopf (46) und einen Schaft (48) umfasst, wobei der erste Abschnitt (32) daher mit einem Gewindesitz (50) bereitgestellt ist, wobei das Loch (30) aufgeweitet ist, um in der Lage zu sein, wenigstens teilweise den Kopf (46) der Schraube (44) aufzunehmen.

9. Parkvorrichtung nach einem der Ansprüche 4 - 8, **dadurch gekennzeichnet, dass** der erste Abschnitt (32) eine äußere Fläche (52) mit einem hexagonalen transversalen Querschnitt umfasst.

## Revendications

1. Dispositif de stationnement (12) d'un étrier de frein (14) pour un frein à disque d'un véhicule, comprenant :
- un corps de support (16) ;
- un moyen de poussée (18) prévu sur ledit corps de support, apte à exercer une action de poussée sur au moins une plaquette dudit frein à disque ;
- un moyen d'actionnement (20) apte à actionner ledit moyen de poussée (18) pour exercer ladite action de poussée sur ladite au moins une plaquette, ledit moyen d'actionnement (20) comprenant un levier d'actionnement (22) relié de manière à pouvoir tourner au corps de support (16), ledit levier d'actionnement (22) étant mobile entre : une position opérationnelle à laquelle ledit dispositif de stationnement (12) est actif, et une position de repos à laquelle ledit dispositif de stationnement (12) est inactif ;
ledit moyen d'actionnement (20) comprend une butée ajustable (24) pour ledit levier d'actionnement (22) à ladite position de repos ;
**caractérisé en ce que**
ledit levier d'actionnement (22) comprend une surface latérale (28), ladite butée ajustable (24) étant apte à coopérer avec la surface latérale (28) dudit levier d'actionnement (22), ladite butée ajustable (24) étant une broche façonnée qui réalise un couplage de came avec la surface latérale (28) dudit levier d'actionnement (22).

2. Dispositif de stationnement (12) selon la revendication précédente, **caractérisé en ce que** ledit moyen d'actionnement comprend un élément de contraste (26) relié de manière amovible au corps de support (16), ladite butée ajustable (24) étant prévue sur ledit élément de contraste (26).

3. Dispositif de stationnement (12) selon la revendication précédente, **caractérisé en ce que** ledit élément de contraste (26) et ledit levier d'actionnement (22) sont sensiblement parallèles l'un à l'autre, ladite butée ajustable (24) faisant saillie depuis ledit élément de contraste (26) vers ledit levier d'actionnement (22), ladite butée ajustable (24) faisant saillie depuis ledit élément de contraste (26) d'une quantité supérieure à la distance entre ledit levier d'actionnement (22) et ledit élément de contraste (26).

4. Dispositif de stationnement (12) selon la revendication précédente, **caractérisé en ce que** la butée ajustable (24) est prévue sur un trou (30) de l'élément de contraste (26), ladite butée ajustable (24) comprend une première partie (32) et une seconde partie (34), ladite première partie (32) définissant un axe de rotation (36) pour ladite butée ajustable (24), ladite seconde partie (34) étant apte à réaliser ledit couplage de came avec la surface latérale (28) dudit levier d'actionnement (22).

5. Dispositif de stationnement (12) selon la revendication précédente, **caractérisé en ce que** ladite seconde partie (34) comporte une coupe transversale (38) avec un bord (40), ledit bord (40) présentant une distance variable par rapport audit axe de rotation (36).

6. Dispositif de stationnement (12) selon la revendication précédente, **caractérisé en ce que** ladite seconde partie (34) est un cylindre qui définit un axe de cylindre (42), ledit axe de cylindre (42) étant parallèle audit axe de rotation (36) et distant de celui-ci.

7. Dispositif de stationnement (12) selon la revendication précédente, **caractérisé en ce que** la distance entre ledit axe de rotation (36) et ledit axe de cylindre (42) est entre 1,6 mm et 1,4 mm, ledit cylindre présentant un diamètre entre 12,1 mm et 11,9 mm.

8. Dispositif de stationnement selon l'une quelconque des revendications précédentes, **caractérisé en ce que** ladite butée ajustable (24) comprend une vis de fixation (44) comprenant une tête (46) et une tige (48), ladite première partie (32) étant donc pourvue d'un siège fileté (50), ledit trou (30) étant évasé de manière à pouvoir loger au moins partiellement la tête (46) de ladite vis (44).

9. Dispositif de stationnement selon l'une quelconque des revendications 4 à 8, **caractérisé en ce que** ladite première partie (32) comprend une surface extérieure (52) présentant une coupe transversale hexagonale.
